# FASCICULE DE BREVET EUROPEEN

(11) **EP 1 304 025 B1**
(45) Date de publication et mention de la délivrance du brevet: **13.02.2008**
(21) Numéro de dépôt: 02292556.4
(22) Date de dépôt: 16.10.2002
(51) Int. Cl.: A01D 23/02

(54) **Dispositif pour effeuiller des végétaux, tels que les betteraves**
Vorrichtung zum Entblättern von Pflanzen wie Zuckerrüben
Device for defoliating plants, such as sugar beet plants

(30) Priorité: 18.10.2001 FR 0113448
(43) Date de publication de la demande: 23.04.2003
(73) Titulaire: ETABLISSEMENTS JEAN MOREAU, 59159 Marcoing (FR)
(72) Inventeur: Jette, Etienne, 59159 Marcoing (FR)
(74) Mandataire: Colas, Jean-Pierre

(56) Documents cités:
- FR-A- 1 454 327
- FR-A- 1 603 081
- FR-A- 2 206 662
- US-A- 3 099 121
- US-A- 5 895 320

## Description

La présente invention est relative à un dispositif pour effeuiller des végétaux, tels que des betteraves, cultivés en lignes et pourvus d'une touffe de feuilles s'étendant au-dessus d'un tubercule en saillie sur le sol, et, plus particulièrement, à un tel dispositif comportant un rotor d'axe horizontal déplacé au-dessus du sol, parallèlement aux lignes de végétaux, le rotor étant muni d'une pluralité de couteaux présentant chacun un bord de coupe écarté de l'axe du rotor d'une distance prédéterminée pour couper lesdites feuilles au niveau de leurs pétioles.

On connaît de tels dispositifs, munis de couteaux, ou fléaux, rotatifs, notamment des brevets FR 2 450 042 et FR 2 622 764,ce dernier étant au nom de la demanderesse.

Après la coupe des feuilles, il reste sur le tubercule des restes des pétioles des feuilles, les couteaux passant au-dessus du tubercule de manière à ne pas attaquer celui-ci, ce qui provoquerait une perte de poids de matière utile livrée, dans le cas des betteraves à sucre, à une usine équipée pour en extraire le sucre.

Il convient cependant de fournir à celle-ci une matière première aussi propre que possible et, notamment, débarrassée de toute tare "terre" ou "feuilles". La présence de telles tares oblige en effet à prévoir un nettoyage mécanisé en usine, générateur de boues à décanter, polluantes et d'odeur nauséabonde.

On a donc conçu des moyens de "scalpage" pour débarrasser les tubercules du reste de pétioles qu'ils portent après la coupe, ces moyens prenant la forme de lames métalliques tranchantes traînées sur le sol par le dispositif, en aval du rotor de coupe, de manière à passer sur la partie du tubercule en saillie au-dessus du sol et à en sectionner le sommet. Ces moyens de "scalpage" sont évidemment inefficaces quand ils passent sur un tubercule entièrement enterré ou protégé par un tubercule placé en arrière et dépassant largement du sol. Il présente en outre l'inconvénient de supprimer aussi une partie du collet de la plante, alors que ce collet comprend de la matière utile, car contenant du sucre.

On connaît encore des dispositifs d'effeuillage comprenant, sous un même carter, plusieurs rotors successifs, l'un au moins constituant un rotor de coupe, et un autre au moins un rotor nettoyeur. De tels dispositifs sont encombrants et coûteux, du fait de la multiplication des rotors dans le carter.

Cet inconvénient est supprimé quand on solidarise les couteaux de coupe et les moyens de scalpage associés comme proposé dans la demande de brevet français n° 99 09904 du 30 juillet 1999 où chaque couteau est associé à une batte de scalpage en caoutchouc, cette demande étant déposée au nom de la demanderesse.

Cette solidarisation a néanmoins pour inconvénient de rigidifier l'assemblage du couteau et des moyens de scalpage. Quand ces derniers prennent la forme d'une batte en caoutchouc, notamment, cette rigidification fait perdre de sa souplesse à la batte et il en résulte un scalpage plus violent des tubercules, au détriment de la qualité et de la quantité de la matière utile récoltée.

On connaît également du brevet FR 1 603 081 un dispositif d'effeuillage dans lequel les moyens de scalpage, prenant la forme de battes souples, sont articulées indépendamment des couteaux sur le rotor de coupe.

La présente invention a notamment pour but de fournir un dispositif du type de celui divulgué par le document FR 1 603 081 qui présente une meilleure efficacité de scalpage.

On atteint ce but de l'invention avec un dispositif conforme à la revendication 1 ci-annexée.

Comme on le verra plus loin en détail, la présence de deux volets par batte, situés l'un derrière l'autre et présentant deux longueurs radiales différentes, permet deux actions successives sur chaque tubercule, améliorant l'efficacité de l'enlèvement des pétioles des feuilles de ce tubercule.

Selon d'autres caractéristiques, optionnelles, de la présente invention :
- le volet le plus proche du couteau associé présente une longueur radiale plus courte que celle de l'autre volet,
- la batte présente, en section transversale, la forme générale d'un U, l'axe d'articulation portant ladite batte au niveau du fond dudit U.

D'autres caractéristiques et avantages de la présente invention apparaîtront à la lecture de la description qui va suivre et à l'examen du dessin annexé dans lequel :
- la figure 1 est une vue partielle, en coupe transversale, du dispositif d'effeuillage suivant la présente invention,
- la figure 2 est une vue de détail, en coupe transversale, du dispositif de la figure 1, représentant un couteau de coupe et les moyens d'enlèvement associés, et
- la figure 3 est une vue de ces moyens d'enlèvement, prise selon la flèche F₃ de la figure 2.

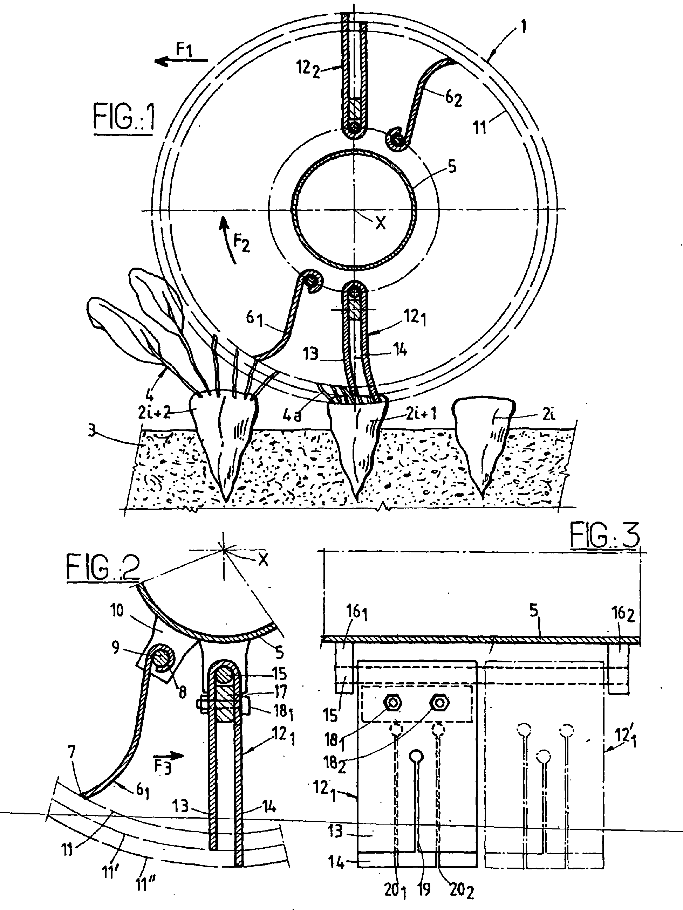

On se réfère à la figure 1 du dessin annexé où l'on a représenté schématiquement le rotor 1 du dispositif d'effeuillage suivant la présente invention, placé classiquement sous un capot ou carter (non représenté) comprenant des moyens de support de ce rotor 1, propre à permettre de déplacer celui-ci, à une hauteur prédéterminée, au-dessus d'un champ de végétaux à tubercules tels que 2ᵢ,2_{i+1,}2_{i+2,} .... des betteraves à sucre par exemple, cultivés en lignes, chacun des tubercules s'étendant partiellement en saillie au-dessus du sol 3 et portant une touffe de feuilles telle que celle globalement repérée 4. Le rotor est ainsi déplacé dans le sens de la flèche F₁, parallèlement aux lignes de tubercules.

Le rotor comprend un arbre 5 sur lequel sont montés des couteaux de coupe tels que 6₁,6₂, etc... Ces couteaux sont distribués régulièrement, d'une part dans un même plan perpendiculaire à l'arbre 5, comme c'est le cas des couteaux 6₁,6₂ et, d'autre part, au long de l'arbre, au niveau des rangs ou lignes de tubercules à effeuiller. Dans un même plan perpendiculaire à l'arbre 5, on peut ainsi disposer deux couteaux ou plus, quatre par exemple.

Comme représenté à la figure 2, le couteau 6₁ représenté à titre d'exemple présente en coupe longitudinale une forme légèrement arquée délimitée, à une extrémité, par un bord de coupe 7 et conformé à l'autre extrémité en enveloppe cylindrique 8 dans laquelle passe un axe d'articulation 9 de ce couteau sur le rotor 1. Pour ce faire, cet axe 9 est porté par des oreilles soudées ou autrement fixées sur l'arbre 5 du rotor, telles que l'oreille 10 visible sur la figure 2.

Quand le rotor 1 tourne à une vitesse relativement grande, 500 tours/mn par exemple, la force centrifuge agissant sur les couteaux 6₁,6₂ tend à les placer dans une position sensiblement radiale, comme représenté à la figure 1. Le sens de rotation du rotor 1 étant repéré par la flèche F₂, les bords de coupe 7 des couteaux 6₁,6₂, ... tournent sur une même trajectoire circulaire 11 de rayon prédéterminé, centrée sur l'axe X du rotor 1, ce rayon étant ajusté pour que ces bords de coupe passent à proximité des tubercules en coupant les touffes de feuilles qu'ils portent au niveau de leurs pétioles, comme illustré schématiquement à la figure 1 pour le tubercule 2ᵢ₊₁. La position du point bas de la trajectoire 11 est évidemment fonction de la hauteur de l'axe X du rotor 1 au-dessus du sol, déterminée par les moyens de support (non représentés) de ce rotor et de son carter sur ce même sol.

Une telle coupe laisse cependant demeurer sur le tubercule la base 4a des pétioles des feuilles, comme cela apparaît sur la figure 1. Il convient d'éliminer ce reste de "verts" de manière que le tubercule arraché et envoyé à l'usine ne comporte que de la matière utile, celle du tubercule, et n'exige alors aucun traitement supplémentaire, générateur de fluides polluants comme on l'a vu plus haut.

Pour ce faire, le rotor du dispositif selon l'invention comprend des moyens d'enlèvement de ces bases de pétioles, constitués par des battes 12₁,12₂... articulées chacune sur le rotor 5, immédiatement en aval d'au moins un couteau 6₁,6₂, ... associé, respectivement, en suivant le sens de rotation du rotor repéré par la flèche F₂.

Suivant une caractéristique de la présente invention, l'articulation de chaque batte est indépendante du ou des couteaux associés.

Avantageusement, ces battes sont réalisées en une matière souple, telle que du caoutchouc.

Chaque batte comprend, comme la batte 12₁ par exemple, deux volets 13,14 (voir figure 2) sensiblement parallèles, portés par un axe d'articulation 15 lui-même parallèle à l'axe X du rotor 1 et distant de cet axe.

Avantageusement, comme on le verra plus loin, le volet 13, plus proche du couteau 6₁ associé que le volet 14, présente une longueur radiale (vue de l'axe X) plus courte que celle du volet 14.

Comme cela apparaît aussi sur les figures 1 et 2, la batte 12₁ présente cependant, en section transversale, la forme générale d'un U et elle est portée par son axe d'articulation 15 au niveau du fond du U. L'axe d'articulation 15 est lui-même monté entre deux oreilles 16₁, 16₂ (voir figure 3) débordant radialement de l'arbre 5 du rotor 1. Une cale 17 est disposée entre les deux volets 13 et 14 de la batte 12₁ et fixée avec des boulons 18₁, 18₂ (voir figures 2 et 3). Cette cale 17 est disposée au voisinage de l'axe 15 d'articulation de la batte. Elle retient ainsi la batte sur cet axe. Elle définit aussi l'écartement des deux volets de la batte, sensiblement égal au diamètre de l'axe 15 dans le mode de réalisation représenté.

Comme représenté sur la figure 3, les volets 13 et 14 peuvent être découpés de fentes radiales 19 et 20₁,20₂ respectivement, pour des raisons explicitées dans la suite.

La figure 3 fait aussi apparaître que deux battes 12₁,12'₁, ou plus, peuvent être disposées en ligne sur l'axe 15, de manière à couvrir complètement ensemble la largeur d'un rang de betteraves à effeuiller, par exemple, en l'arrière de couteaux de même largeur disposés de même sur l'axe 9.

Les battes disposées sur un même axe 15 peuvent présenter aussi chacune une largeur axiale supérieure à celles d'un des couteaux disposés sur l'axe 9 adjacent. C'est ainsi qu'une même batte peut être associée à plusieurs couteaux. Selon un mode de réalisation préféré de la présente invention, deux battes sont associées à trois couteaux, la largeur totale travaillée par les battes étant égale à celle travaillée par les couteaux.

Dans le mode de réalisation représenté, les axes 9 et 15 sont disposés à des distances égales de l'axe X du rotor, ce qui simplifie la structure de ce rotor.

Le fonctionnement du dispositif suivant l'invention décrit ci-dessus s'établit alors comme suit.

On notera tout d'abord que, lorsque le rotor 1 tourne à vitesse relativement élevée, 500 tours/minute par exemple, les couteaux et les volets 13, 14 des battes prennent des positions sensiblement radiales, leurs extrémités décrivant des trajectoires circulaires 11, 11', 11" respectivement (voir figure 2) de rayon croissant dans cet ordre.

C'est ainsi que, le rotor progressant sur des rangs de betteraves dans le sens de la flèche F₁, les couteaux 6ᵢ passent successivement légèrement au-dessus des tubercules 2ᵢ, 2ᵢ₊₁, 2ᵢ₊₂.... (voir figure 1) en coupant et en l'enlevant l'essentiel des feuilles et en laissant demeurer sur les tubercules seulement les base 4a des pétioles de ces feuilles.

Ces bases 4a sont attaquées, immédiatement après le passage d'un couteau 6ᵢ, d'abord par le volet 13 puis par le volet 14 de la batte 12ᵢ qui suit immédiatement le couteau responsable de la coupe de l'essentiel des feuilles du tubercule considéré.

Les volets en caoutchouc de cette batte qui portent alors sur la tête du tubercule ploient à leurs extrémités au contact du tubercule (voir fig. 1), grâce à la souplesse du matériau qui les constitue et aux fentes 19, 20₁,20₂ qui réduisent la raideur de ces volets.

Les volets 13, 14 passent successivement sur le tubercule en se modelant sur sa géométrie, tout en enlevant par rasage les bases 4a des pétioles, plus fragiles que le tubercule lui-même, relativement dur.

Ce rasage s'opère en douceur grâce à la souplesse du matériau qui constitue les battes et, suivant l'invention, grâce à l'articulation de ces battes sur le rotor, indépendamment de celle des couteaux. Le passage sur le tubercule de deux volets souples de longueur croissante contribuent aussi à la douceur du rasage.

Le tubercule ainsi effeuillé et rasé par les passages successifs des divers couteaux et battes rotatives du dispositif suivant l'invention, conserve son intégrité et sa masse tout en étant débarrassé de tout " vert". On maximise ainsi la quantité et la qualité de la matière utile récoltable, après arrachage des tubercules effeuillés.

## Revendications

1. Dispositif pour effeuiller des végétaux, tels que des betteraves, cultivés en lignes et pourvus d'une touffe de feuilles (4) s'étendant au-dessus d'un tubercule (2ᵢ) en saillie sur le sol, ce dispositif comportant un rotor (1) muni d'une pluralité de couteaux (6ᵢ) pour couper lesdites feuilles au niveau de leurs pétioles, et des moyens (12ᵢ) associés chacun à au moins un couteau (6ᵢ) pour enlever les restes (4a) des pétioles desdites feuilles demeurant sur le tubercule (2ᵢ) après ladite coupe, chacun desdits moyens d'enlèvement (12ᵢ) étant articulé sur le rotor immédiatement en aval du couteau (6ᵢ) associé, en suivant le sens de rotation du rotor (1), lesdits moyens d'enlèvement prenant la forme de battes (12ᵢ) en un matériau souple, **caractérisé en ce que** chaque batte (12) comprend deux volets (13,14) sensiblement parallèles portés par un axe (15) d'articulation parallèle et distant de celui (X) dudit rotor (1) et
**en ce que** le volet (13) le plus proche du couteau associé (6ᵢ) présente une longueur radiale plus courte que celle de l'autre volet (14).

2. Dispositif selon la revendication 1, **caractérisé en ce que** ladite batte (12ᵢ) présente, en section transversale, la forme générale d'un « U », ledit axe d'articulation (15) portant ladite batte (12ᵢ) au niveau du fond dudit « U ».

3. Dispositif conforme à la revendication 2, **caractérisé en ce qu'**une cale (17) est montée entre les deux volets de chaque batte (12ᵢ) et fixée sur ceux-ci au voisinage dudit axe d'articulation (15).

4. Dispositif conforme à l'une quelconque des revendications précédentes, **caractérisé en ce qu'**au moins un desdits volets (13,14) est découpé d'au moins une fente radiale (19 ; 20₁,20₂).

## Claims

1. Device for defoliating plants such as beet plants, cultivated in rows and having a tuft of leaves (4) extending above a tuber (2ᵢ) projecting above the ground, this device comprising a rotor (1) fitted with a plurality of blades (6₁) for cutting off said leaves at their petioles, and means (12ᵢ) each associated with at least one blade (6₁) for removing the residues (4a) of the petioles of said leaves remaining on the tuber (2₁) after said cut, each of said removal means (12ᵢ) being jointed to the rotor immediately downstream of the associated blade (6ᵢ), following the direction of rotation of the rotor (1), said removal means being in the form of beaters (12ᵢ) made of a flexible material, **characterised in that** each beater (12) comprises two substantially parallel flaps (13, 14) carried by an articulation spindle (15) parallel to and spaced from the axis (X) of said rotor (1) and **in that** the flap (13) closest to the associated blade (6ᵢ) has a radial length which is shorter than that of the other flap (14).

2. Device according to claim 1, **characterised in that** said beater (12ᵢ) is generally "U"-shaped, in cross section, said articulation spindle (15) carrying said beater (12ᵢ) level with the base of said "U".

3. Device according to claim 2, **characterised in that** a wedge (17) is mounted between the two flaps of each beater (12;) and fixed thereto in the region of said articulation spindle (15).

4. Device according to any one of the preceding claims, **characterised in that** at least one of said flaps (13, 14) has at least one radial slot (19; 20₁, 20₂) cut out from it.

## Patentansprüche

1. Vorrichtung zum Entblättern von Pflanzen, wie beispielsweise Zuckerrüben, die in Zeilen kultiviert werden und mit einem Büschel von Blättern (4) versehen sind, das sich über einer Knolle (2ᵢ), die aus dem Boden ragt, erstreckt, wobei diese Vorrichtung einen Rotor (1), der mit einer Vielzahl von Messern (6ᵢ) versehen ist, um die Blätter im Bereich ihrer Blattstiele abzuschneiden, und Mittel (12ᵢ) umfasst, die jeweils mit mindestens einem Messer (6ᵢ) verbunden sind, um die Reste (4a) der Blattstiele der Blätter, die auf der Knolle (2ᵢ) nach dem Abschneiden verbleiben, abzuheben, wobei jedes der Abhebungsmittel (12ᵢ) auf dem Rotor unmittelbar stromabwärts zum zugehörigen Messer (6ᵢ) in Drehrichtung des Rotors (1) angelenkt ist, wobei die Abhebungsmittel die Form von Leisten (12ᵢ) aus einem biegsamen Material annehmen, **dadurch gekennzeichnet, dass** jede Leiste (12) zwei im Wesentlichen parallele Klappen (13, 14) umfasst, die von einer Gelenkachse (15) getragen werden, die zu jener (X) des Rotors (1) parallel und von dieser entfernt ist, und dass die Klappe (13), die sich am nächsten zum zugehörigen Messer (6ᵢ) befindet, eine kürzere radiale Länge als jene der anderen Klappe (14) aufweist.

2. Vorrichtung nach Anspruch 1, **dadurch gekennzeichnet, dass** die Leiste (12ᵢ) im Querschnitt eine allgemeine Form eines "U" aufweist, wobei die Gelenkachse (15) die Leiste (12ᵢ) im Bereich des Bodens des "U" trägt.

3. Vorrichtung nach Anspruch 2, **dadurch gekennzeichnet, dass** ein Keil (17) zwischen den beiden Klappen jeder Leiste (12ᵢ) montiert und auf dieser in der Nähe der Gelenkachse (15) befestigt ist.

4. Vorrichtung nach einem der vorhergehenden Ansprüche, **dadurch gekennzeichnet, dass** mindestens eine der Klappen (13, 14) mindestens einen radialen Schlitz (19; 20₁, 20₂) aufweist.
